# EUROPÄISCHE PATENTSCHRIFT

(11) **EP 2 196 079 B1**
(45) Veröffentlichungstag und Bekanntmachung des Hinweises auf die Patenterteilung: **25.01.2012**
(21) Anmeldenummer: 09401043.6
(22) Anmeldetag: 03.12.2009
(51) Int. Cl.: A01C 7/08

(54) **Nachfüllsystem**
Refilling system
Système de remplissage

(30) Priorität: 11.12.2008 DE 102008061819
(43) Veröffentlichungstag der Anmeldung: 16.06.2010
(73) Patentinhaber: Amazonen-Werke H. Dreyer GmbH & Co. KG, 49205 Hasbergen (DE)
(72) Erfinder: Scheufler, Bernd, 49205 Hasbergen (DE)

(56) Entgegenhaltungen:
- EP-A2- 1 886 548
- EP-A2- 2 044 827
- US-A1- 2007 113 764

## Beschreibung

Die Erfindung betrifft ein Nachfüllsystem gemäß des Oberbegriffes des Anspruches 1.

Nachfüllsysteme wie die der EP 18 86 548 A2 werden eingesetzt, wenn die den Vereinzelungsorganen zugeordneten Vorratsbehälter ein relativ kleines Fassungsvermögen aufweisen, wobei die Vereinzelungsorgane entweder in einem Bereich angeordnet sind, die keine größere Ausgestaltung der Vorratsbehälter zulassen oder die Vereinzelungsorgane mit den zugeordneten Vorratsbehältern dezentral angeordnet sind. Um dennoch eine große Arbeitsleistung ohne Unterbrechung der Arbeit zu erreichen, müssen die Vorratsbehälter nachgefüllt werden. Hierzu werden derartige Verteilmaschinen mit einem zentralen größeren Vorratstank ausgestattet, von dem aus über mechanische oder pneumatische Fördereinrichtungen die den Vereinzelungsorganen zugeordneten Vorratsbehälter während des Arbeits- oder Ausbringvorganges, ohne den Arbeitsvorgang an sich zu unterbrechen, kontinuierlich oder diskontinuierlich nachgefüllt werden.

Das Problem besteht nun jedoch darin, wenn Vorratsbehälter, die Vereinzelungsorganen zugeordnet sind, die mit einem Überdruck beaufschlagt sind und das Vereinzelungsorgan ebenfalls mit einer Druckdifferenz beaufschlagt ist, während des Ausbringvorganges ohne Unterbrechung der Arbeit nachgefüllt werden sollen.

Derartige mit einem Überdruck beaufschlagte Vorratsbehälter müssen zur Erzeugung der Differenz für das Vereinzelungsorgan, um eine sichere Vereinzelung der Saatkörner zu gewährleisten mit einem relativ hohen Druck beaufschlagt werden, so dass es schwierig ist, mit einer pneumatisch beaufschlagten Nachfüllleitung mit Überdruck beaufschlagte Vorratsbehälter ohne Störung den auf einer Druckdifferenz beruhenden Vereinzelungsvorgang den Nachfüllvorgang durchzuführen.

Der Erfindung liegt daher die Aufgabe zugrunde, ein Nachfüllsystem für zumindest ein mit einem Überdruck beaufschlagten Vorratsbehälter und mit einer Druckdifferenz beaufschlagtes Vereinzelungsorgan ausgestatteten Vorratsbehälter einer landwirtschaftlichen Verteilmaschine in möglichst einfacher Weise zu ermöglichen.

Diese Aufgabe wird erfindungsgemäß durch die Merkmale des Kennzeichens des Patentanspruches 1 gelöst. Infolge dieser Maßnahmen lassen sich unter Druck bestehende Vorratsbehälter während des Ausbringvorganges über ein Nachfüllsystem mit Saatgut aus einem Vorratstank über eine Nachfüllleitung befüllen. Somit braucht der Arbeits- oder Ausbringvorgang nicht unterbrochen zu werden. Es ist somit in einfacher Weise ein kontinuierliches Arbeiten möglich.

In einer Ausführungsform ist vorgesehen, damit das Saatgut über die Nachfüllleitung aus dem Vorratstank über den Zwischenbehälter in den Vorratsbehälter bei Aufrechterhaltung des Überdruckes im System eingeleitet werden kann, dass zwischen dem Zwischenbehälter und dem Vorratsbehälter eine Übergabeschleuse angeordnet ist.

Um dieses zu gewährleisten, ist in bevorzugter Weise vorgesehen, dass die Übergabeschleuse als zumindest annähernd luftdichte Schleuse ausgebildet ist.

In einer anderen Ausführungsform ist vorgesehen, dass der Zwischenbehälter als druckdichter Behälter ausgebildet ist.

Hierdurch ist es möglich, Saatgut zunächst in dem Zwischenbehälter zwischen zulagern und dann aus dem Zwischenbehälter in den Vorratsbehälter zu überführen. Hierbei ist zur Einleitung des Materials in den Zwischenbehälter über die Nachfüllleitung und dem anschließenden Überleiten des Materials aus dem Zwischenbehälter in den Vorratsbehälter vorgesehen, dass der Zwischenbehälter ein verschließbares Luftentweichungssystem enthält, dass das Luftentweichungssystem bei dem Befüllen des Vorratsbehälters über die Nachfüllleitung aus dem Zentralbehälter geöffnet ist, und dass das Luftentweichungssystem bei dem Nachfüllen des Vorratsbehälters aus dem Zwischenbehälter geschlossen ist, so dass der Zwischenbehälter mit einem Druck, der zumindest annähernd dem Druck im Vorratsbehälter entspricht, beaufschlagbar ist.

Weitere Einzelheiten der Erfindung sind den übrigen Unteransprüchen, der Beispielsbeschreibung und den Zeichnungen zu entnehmen. Hierbei zeigen
- Fig. 1: ein erfindungsgemäßes Nachfüllsystem für eine Verteilmaschine in Prinzipdarstellung und
- Fig. 2: ein weiteres erfindungsgemäßes Nachfüllsystem für eine Verteilmaschine ebenfalls in Prinzipdarstellung.

Das erfindungsgemäße Nachfüllsystem für den Vorratsbehälter 1 einer beispielsweise als Einzelkornsämaschine ausgebildeten Verteilmaschine aus einem größeren Vorratstank 2 weist das motorisch angetriebene Druckluftgebläse 3, die Nachfüllleitung 4, die Druckbeaufschlagungsleitung 5 für das Vereinzelungsorgan 6 der Verteilmaschine und dem dem Vorratsbehälter 1 der Verteilmaschine zugeordneten Zwischenbehälter 7 auf.

Die Verteilmaschine weist das motorisch angetriebene Vereinzelungsorgan 6 auf, welches mit einer Druckdifferenz beaufschlagt wird, damit sich die zu vereinzelnden Samenkörner an die nicht dargestellten Perforationen des als Vereinzelungstrommel ausgebildeten Vereinzelungsorgan 6 beim Drehen er Perforationen der Vereinzelungstrommel durch den Saatgutvorrat anlagern können. Dem Vereinzelungsorgan 6 der Verteilmaschine ist der vor erwähnte Vorratsbehälter 1 zugeordnet. Das Vereinzelungssystem der Verteilmaschine ist als Drucksystem ausgebildet. Dies bedeutet, dass auch der Vorratsbehälter 1 unter einen Überdruck gesetzt wird und daher druckdicht abgeschlossen sein muss. Während des Ausbringvorganges muss der Vorratsbehälter 1 zumindest mit einem Überdruck von etwa 40 bis 50 bar beaufschlagt werden, um eine sichere und gleichmäßige Vereinzelung der Samenkörner über das Vereinzelungsorgan 6 durch die Druckdifferenz an den Perforationen der Vereinzelungstrommel sicherzustellen. Unter diesem Überdruck steht auch der Vorratsbehälter 1. Dieser Überdruck wird durch das Druckluftgebläse 3 erzeugt. Hierzu ist das Gebläse 3 über die Druckleitung 5 mit dem Gehäuse 8 des Vereinzelungsorgans 6 und dem Vorratsbehälter 1 der Verteilmaschine verbunden.

Um den Vorratsbehälter 1 in absätziger Weise mit Material aus dem Vorratstank 2, der ein mehrfaches Aufnahmevolumen als der Vorratsbehälter 1, der dem Vereinzelungsorgan 6 zugeordnet ist, aufweist, ist dem Vorratsbehälter 1 der aufgesetzte Zwischenbehälter 7 zwischen dem Ende der Nachfüllleitung 4 und dem Vorratsbehälter 1 angeordnet. Der Boden 9 des Zwischenbehälters verschließt die obere Öffnung des Vorratsbehälters druckdicht. In dem trichterförmigen Boden ist an dessen tiefster Stelle eine Öffnung angeordnet. Diese Auslassöffnung 10 ist über einen von dem Motor 11 betätigbaren Schieber 12 zu öffnen und druckdicht zu verschließen.

Dem Deckel 13 des Zwischenbehälters 7 ist eine Öffnung 14 zugeordnet. Dieser Öffnung 14 ist ein Luftentweichungssystem 15 zugeordnet. Dieses Luftentweichungssystem 15 ist über einen Schließmechanismus 16, welcher über ein elektrisch angetriebenes Stellelement 17 zu betätigen ist, zu verschließen und öffnen.

Sowohl dem Zwischenbehälter7 wie auch dem Vorratsbehälter 1 der Verteilmaschine sind Füllstandssensoren 18, 19, 20, die mit einem elektronischen Bordcomputersystem 21 verbunden sind, zugeordnet. Die Funktionsweise der Füllstandssensoren 18, 19, 20 wird weiter unten erläutert.

Die Funktionsweise des Nachfüllsystems ist folgende:

Es wird zunächst davon ausgegangen, dass sich in dem Vorratsbehälter 1 bereits Saatgut befindet, wobei sich der Saatgutspiegel in dem Vorratsbehälter 1 oberhalb des unteren Füllstandssensors 18 des Vorratsbehälters 1 befindet.

Über das Druckgebläse 3 wird die Vereinzelungstrommel 6, der Vorratsbehälter 1 und die zu der Nachfüllleitung 4 führende Leitung 4' mit Druckluft beaufschlagt. Über die Zellenradschleuse 22 des Vorratstanks 2 wird Saatgut so lange der Nachfüllleitung 4 zugeleitet bis der Saatgutspiegel in dem Zwischenbehälter 7 die Höhe des Füllstandssensors 20 des Zwischenbehälters 7 erreicht. Wenn der Sensor 20 in dem Zwischenbehälter 7 den Saatgutspiegel derart erfasst, dass der Saatgutspiegel diese festgelegte Höhe in den Zwischenbehälter 7 erreicht, wird die Antriebsvorrichtung der Zellenradschleuse 22 des Vorratstanks 2 abgeschaltet, so dass kein weiteres Saatgut der Nachfüllleitung 4 zugeführt wird. Während der Zuleitung von Saatgut über die Nachfüllleitung 4 in den Zwischenbehälter 7 ist das Luftentweichungssystem 15 geöffnet, so dass die aus der Nachfüllleitung 4 in den Zwischenbehälter 7 einströmende Luft über das Luftentweichungssystem 15 entweichen kann. Um nun das Saatgut aus dem Zwischenbehälter 7 in den Vorratsbehälter 1 zu überführen, wird zunächst von dem Bordcomputer 21 ein Signal an das Betätigungselement 17 des Luftentweichungssystems 15 gesandt, so dass das Luftentweichungssystem 15 geschlossen wird.

Wenn der untere Füllstandssensor 18 des Vorratsbehälters 1 an den Bordcomputer 21 meldet, dass der Saatgutspiegel in dem Vorratsbehälter 1 unter die von ihm gemessene Marke fällt, sendet der Bordcomputer ein Signal an das Betätigungselement 11 für den Schieber 12, um diesen in Öffnungsstellung zu bringen. Somit gelangt Saatgut aus dem Zwischenbehälter 7 in den Vorratsbehälter 1 durch die Auslauföffnung 10. Da das Luftentweichungselement 16 bei diesem Übergabevorgang verschlossen ist, wird die Druckdifferenz an den Perforierungen der Vereinzelungstrommel 6 aufrechterhalten.

Wenn sich kein Saatgut mehr in dem Zwischenbehälter 7 befindet oder der Saatgutspiegel die von dem oberen Füllstandssensor 19 des Vorratsbehälters 1 gemessene Füllhöhe erreicht, wird über das Betätigungselement 11 die Auslauföffnung 10 durch den Schieber 12 geschlossen. Dies geschieht dadurch, dass aufgrund des von dem oberen Füllstandssensor 19 des Vorratsbehälters an dem Bordcomputer gesendeten Signals von dem Bordcomputer 21 ein entsprechendes Signal an das Betätigungselement 11 zum Verschieben des Schiebers 12 gesendet wird. Weiterhin sendet der Bordcomputer 21 ein Signal an das Bestätigungselement 17 für das Luftentweichungssystem 15, damit dieses wieder geöffnet wird. Weiterhin wird über den Bordcomputer 21 ein Signal an die Antriebsvorrichtung des Zellenrades 22 gesendet, damit die Antriebsvorrichtung wieder eingeschaltet. Somit wird über das Zellenrad 22 wieder Saatgut aus dem Vorratstank 2 in die Nachfüllleitung 4 eingespeist wird. Hierdurch wird der Zwischenbehälter 7 wieder mit Saatgut befüllt. Wenn über den Füllstandssensor 20 des Zwischentanks 7 gemeldet wird, dass der Füllstand des Saatgutes den von ihm gemessenen Füllstand erreicht hat, wird über dem Bordcomputer 21 die Antriebsvorrichtung der Zellenradschleuse 22 des Vorratstanks 2 abgeschaltet und das Luftentweichungssystem 15 des Zwischenbehälters 7 wird geöffnet.

Wenn dann von dem unteren Füllstandssensor 18 des Vorratsbehälters 1 wiederum an den Bordcomputer 21 gemeldet wird, dass der niedrige Saatgutspiegel, der von ihm gemessen wird, erreicht ist, erfolgt in vorbeschriebener Weisung die Nachfüllung des Vorratsbehälters 1 mit Saatgut aus dem Zwischenbehälter 7.

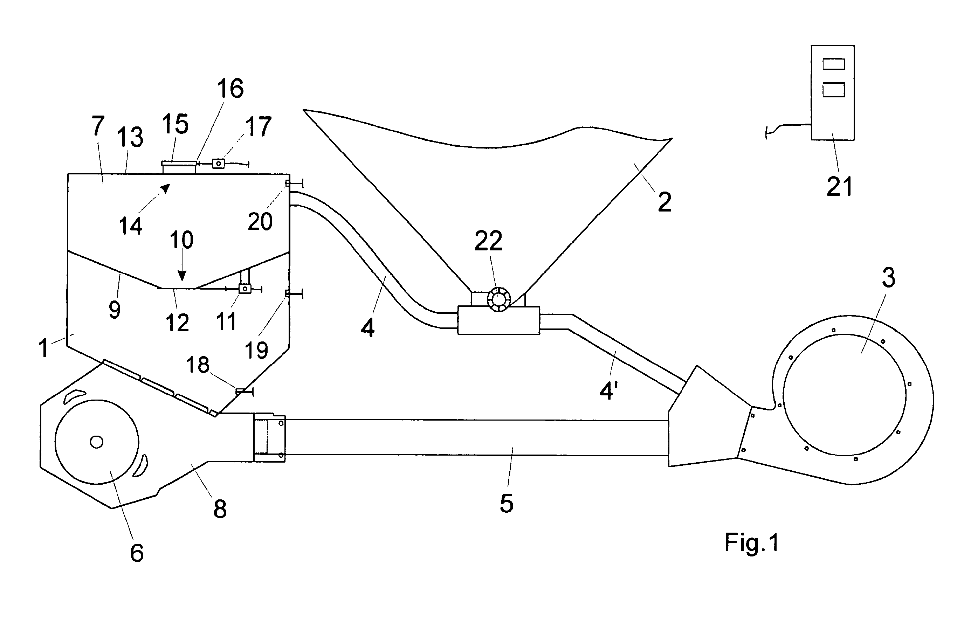

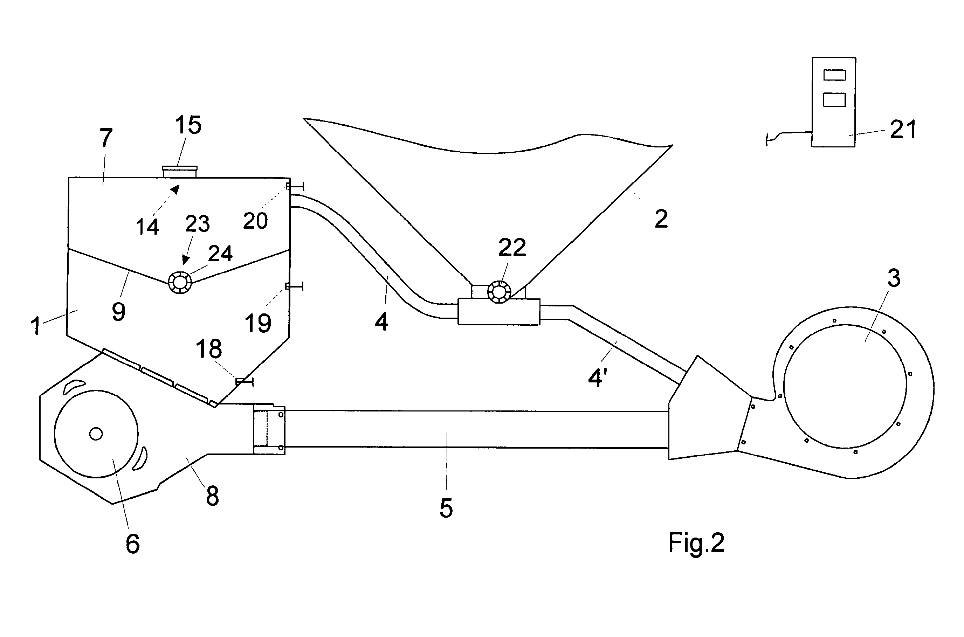

Das Nachfüllsystem gemäß Fig. 2 unterscheidet sich von dem Nachfüllsystem gemäß Fig. 1 durch eine andere Ausgestaltung der Übergabeschleuse 23 und des Luftentweichungssystems 15. Das Luftentweichungssystem 15 ist nicht verschließbar, weil die Übergabeschleuse 23 zwischen dem Zwischenbehälter 7 und dem Vorratsbehälter 1 als zumindest annähernd luftdichte Zellenradschleuse 24 ausgebildet ist. Durch die Ausgestaltung der Übergabeschleuse 24 als Zellenradschleuse 23 kann Saatgut kontinuierlich aus dem Zwischenbehälter 7 in den Vorratsbehälter 1 überführt werden. Die Füllstandssensoren 13, 19, 20 dienen lediglich dazu, über den Bordcomputer 21 sicherzustellen, dass einerseits immer ausreichend Saatgut in dem Zwischenbehälter 7 vorhanden ist und andererseits nicht zu viel Saatgut in den Zwischenbehälter 7 oberhalb des von dem oberen Sensor 20 gemessenen Saatgutspiegels eingefüllt wird. Es kann auch diskontinuierlich gearbeitet werden, indem die Zuförderung des Saatgutes aus dem Zwischenbehälter 7 in den Saatgutbehälter 1 mit einer entsprechend ausreichend großen Förderleistung der Zellenradschleuse 22 über die von den Füllstandssensoren 18, 19, 20 in den Vorratsbehälter 1 in Verbindung mit dem Bordcomputer 21 entsprechend gesteuert wird, so dass der Saatgutspiegel immer zwischen dem von dem unteren oder oberen Füllstandssensor 18, 19 gemessenen Saatgutspiegel in dem Vorratsbehälter 1 pendelt.

## Patentansprüche

1. Nachfüllsystem für zumindest einen mit einem Überdruck beaufschlagten Vorratsbehälter (1) einer landwirtschaftlichen Verteilmaschine, wobei dem Vorratsbehälter (1) zumindest ein mit einer Druckdifferenz beaufschlagtes Vereinzelungsorgan (6) zugeordnet ist, wobei dem Vorratsbehälter (1) mittels zumindest einer pneumatisch beaufschlagten Nachfüllleitung (4) das sich in einem Vorratstank (2) befindliche Saatgut zugefördert wird, **dadurch gekennzeichnet, dass** zum Nachfüllen des Vorratsbehälters (1) über die Nachfüllleitung (4) zwischen dem Vorratstank (2) und dem Vorratsbehälter (1) ein dem Vorratsbehälter (1) zugeordneter Zwischenbehälter (7) vorhanden ist, dass über die Nachfüllleitung (4) der Zwischenbehälter (7) befüllbar und über den Zwischenbehälter (7) unter Aufrechterhaltung der auf das Vereinzelungsorgan (6) einwirkenden Druckdifferenz mittels geeigneter Mittel (12,23,24) der Vorratsbehälter (1) unter Aufrechterhaltung des Überdruckes in dem Vorratsbehälter (1) nachfüllbar ist.

2. Nachfüllsystem nach Anspruch 1, **dadurch gekennzeichnet, dass** zwischen dem Zwischenbehälter (7) und dem Vorratsbehälter (1) eine Übergabeschleuse (12,23,24) angeordnet ist.

3. Nachfüllsystem nach Anspruch 2, **dadurch gekennzeichnet, dass** die Übergabeschleuse (12,23,24) als zumindest annähernd luftdichte Schleuse ausgebildet ist.

4. Nachfüllsystem nach Anspruch 1, **dadurch gekennzeichnet, dass** der Zwischenbehälter (7) als druckdichter Behälter ausgebildet ist.

5. Nachfüllsystem nach Anspruch 4, **dadurch gekennzeichnet, dass** der Zwischenbehälter (7) ein verschließbares Luftentweichungssystem (15,16) enthält, dass das Luftentweichungssystem (15,16) bei dem Befüllen des Vorratsbehälters (1) über die Nachfüllleitung (4) aus dem Vorratstank (2) geöffnet ist, und dass das Luftentweichungssystem (15,16) bei dem Nachfüllen des Vorratsbehälters (1) aus dem Zwischenbehälter (7) geschlossen ist, so dass der Zwischenbehälter (7) mit einem Druck, der zumindest annähernd dem Druck im Vorratsbehälter (1) entspricht, beaufschlagbar ist.

6. Nachfüllsystem nach Anspruch 2, **dadurch gekennzeichnet, dass** die Übergabeschleuse als eine durch eine Öffnung verschließbarer Schieber (12) ausgebildet ist.

## Claims

1. Refill system for at least one storage container (1), subjected to an overpressure, of an agricultural spreading machine, wherein to the storage container (1) is assigned a separating member (6) subjected to a pressure difference, and wherein the seed product present in a storage tank (2) is conveyed to the storage container (1) by means of at least one pneumatically operated refill line (4), **characterized in that**, for the refilling of the storage container (1) via the refill line (4), an interim container (7) assigned to the storage container (1) is present between the storage tank (2) and the storage container (1), **in that** via the refill line (4) the interim container (7) can be filled, and via the interim container (7), the pressure difference acting upon the separating member (6) being maintained by means of suitable means (12, 23, 24), the storage container (1) can be refilled, at the same time as the overpressure in the storage container (1) is maintained.

2. Refill system according to Claim 1, **characterized in that** a transfer lock (12, 23, 24) is arranged between the interim container (7) and the storage container (1).

3. Refill system according to Claim 2, **characterized in that** the transfer lock (12, 23, 24) is configured as an at least approximately air-tight lock.

4. Refill system according to Claim 1, **characterized in that** the interim container (7) is configured as a pressure-tight container.

5. Refill system according to Claim 4, **characterized in that** the interim container (7) contains a closable air escape system (15, 16), **in that** the air escape system (15, 16) is open while the storage container (1) is filled via the refill line (4) from the storage tank (2), and **in that** the air escape system (15, 16) is closed while the storage container (1) is refilled from the interim container (7), so that the interim container (7) can be subjected to a pressure corresponding at least approximately to the pressure in the storage container (1).

6. Refill system according to Claim 2, **characterized in that** the transfer lock is configured as a slide (12) which can be closed through an opening.

## Revendications

1. Système de remplissage pour au moins un bac d'alimentation (1) mis en pression dans une machine distributrice agricole,
* le bac d'alimentation (1) étant associé à au moins un organe séparateur (6) soumis à une différence de pression,
* le bac d'alimentation (1) recevant les semences d'un réservoir (2), par l'intermédiaire d'au moins une conduite de remplissage (4) pneumatique,
système **caractérisé par**
* un réservoir intermédiaire (7) entre le réservoir (2) et le bac d'alimentation (1), ce réservoir (7) étant associé au bac d'alimentation (1) pour le remplir,
* le réservoir intermédiaire (7) se remplissant par la conduite de remplissage (4) et le remplissage du bac d'alimentation (1) en maintenant la surpression dans le bac d'alimentation (1) se fait par le réservoir intermédiaire (7), en maintenant la différence de pression appliquée à l'organe séparateur (6) par des moyens appropriés (12, 23, 24).

2. Système de remplissage selon la revendication 1,
**caractérisé par**
un sas de transfert (12, 23, 24) entre le réservoir intermédiaire (7) et le bac d'alimentation (1).

3. Système de remplissage selon la revendication 2,
**caractérisé en ce que**
le sas de transfert (12, 23, 24) est réalisé au moins sensiblement comme un sas étanche à l'air.

4. Système de remplissage selon la revendication 1,
**caractérisé en ce que**
le réservoir intermédiaire (7) est un réservoir étanche à la pression.

5. Système de remplissage selon la revendication 4,
**caractérisé en ce que**
le réservoir intermédiaire (7) comporte un système d'évacuation d'air (15, 16) susceptible d'être fermé :
- le système d'évacuation d'air (15, 16) étant ouvert pour remplir le bac d'alimentation (1) par la conduite de remplissage (4) à partir du réservoir (2), et
- lors du remplissage du bac d'alimentation (1) à partir du réservoir intermédiaire (7), le système d'évacuation d'air (15,16) est fermé pour que le réservoir intermédiaire (7) soit soumis à une pression qui correspond au moins sensiblement à la pression régnant dans le bac d'alimentation (1).

6. Système de remplissage selon la revendication 2,
**caractérisé en ce que**
le sas de transfert est réalisé sous la forme d'un orifice se fermant par un tiroir (12).
